Europäisches Patentamt

European Patent Office

Office européen des brevets

(19)

(11) Veröffentlichungsnummer: **0 292 749 B1**

(12) **EUROPÄISCHE PATENTSCHRIFT**

(45) Veröffentlichungstag der Patentschrift: **05.08.92**

(51) Int. Cl.$^5$: **G05B 23/02**

(21) Anmeldenummer: **88107177.3**

(22) Anmeldetag: **04.05.88**

Teilanmeldung 89123396.7 eingereicht am 04/05/88.

(54) **Verfahren zum Bestimmen der Parameter eines Verzögerungsgliedes n-ter Ordnung mit gleichen Zeitkonstanten.**

(30) Priorität: **25.05.87 DE 3717555**

(43) Veröffentlichungstag der Anmeldung:
**30.11.88 Patentblatt 88/48**

(45) Bekanntmachung des Hinweises auf die Patenterteilung:
**05.08.92 Patentblatt 92/32**

(84) Benannte Vertragsstaaten:
**AT BE CH DE FR GB IT LI SE**

(56) Entgegenhaltungen:
**EP-A- 0 150 762**
**DE-A- 2 335 788**
**FR-A- 2 515 725**

**PROCEEDINGS OF THE 25TH IEEE CONFE-RENCE ON DECISION & CONTROL, 12. De-zember 1986, Athen, GR; Seiten 1587 - 1592; S. NOLD & R. ISERMANN: "Identifiability of Process Coefficients for Technical Failure Diagnosis"**

(73) Patentinhaber: **SIEMENS AKTIENGESELL-SCHAFT**
**Wittelsbacherplatz 2**
**W-8000 München 2(DE)**

(72) Erfinder: **Preuss, Hans-Peter, Dr.-Ing.**
**Wattkopfstrasse 68**
**W-7500 Karlsruhe 21(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 292 749 B1

**Beschreibung**

Die Erfindung betrifft ein Verfahren zum Bestimmen der Parameter eines Verzögerungsgliedes, insbesondere von Regelstrecken, gemäß dem Oberbegriff des Anspruchs 1.

In der Zeitschrift "Siemens Energie & Automation" 8. Jahrgang (1986), Heft 5, Seite 339 bis 341 ist ein Verfahren zur Prozeßidentifikation beschrieben, bei dem als Regelstreckenmodell ein Verzögerungsglied n-ter Ordnung mit gleichen Zeitkonstanten zugrunde gelegt wird. Die Identifikation besteht in der Bestimmung der Parameter Prozeßverstärkung, Zeitkonstante und Ordnung. Hierzu wird auf den Eingang der Regelstrecke ein Sprungsignal bekannter Höhe gegeben, auf welches diese ein Ausgangssignal, die sogenannte Sprungantwort, abgibt, das in etwa einen S-förmigen zeitlichen Verlauf hat. Es wird zyklisch erfaßt, und seine Steigung wird sukzessive berechnet, bis der Wendepunkt erreicht ist. Aus der Steigung der Tangente im Wendepunkt sowie dem Anfangs- und Endwert werden die Zeitkonstante und die Ordnung bestimmt. Ausgehend von den so ermittelten Streckenparametern können die Reglerparameter errechnet werden, mit dem der Regler bis zur nächsten Identifikation betrieben wird. Der prinzipielle Nachteil eines solchen Verfahrens liegt in der Fixierung auf einem einzigen Punkt der Sprungantwort, dem Wendepunkt. Infolge von Störeinflüssen treten nämlich in der Sprungantwort häufig mehrere Wendepunkte auf, was dazu führen kann, daß der eigentliche Wendepunkt nicht mehr erkannt wird. Ein weiterer Nachteil des bekannten Verfahrens ist die unsichere Endwertbestimmung.

Der vorliegenden Erfindung liegt die Aufgabe zugrunde, ein Verfahren zum Bestimmen der Parameter eines Verzögerungsgliedes n-ter Ordnung mit gleichen Zeitkonstanten anzugeben, das sich durch seine Unempfindlichkeit gegenüber Störungen der Sprungantwort bei geringem Rechenaufwand auszeichnet.

Erfindungsgemäß wird diese Aufgabe mit den im kennzeichnenden Teil des Anspruchs 1 angegebenen Maßnahmen gelöst.

Anhand der Zeichnung werden im folgenden die Erfindung sowie deren Weiterbildungen näher beschrieben und erläutert.

In Figur 1 ist das Prinzipschaltbild einer Anordnung zur Durchführung des neuen Verfahrens dargestellt.

Figur 2 zeigt Zeitdiagramme eines der Regelstrecke nach Figur 1 zugeführten Sprungsignals und der Sprungantwort.

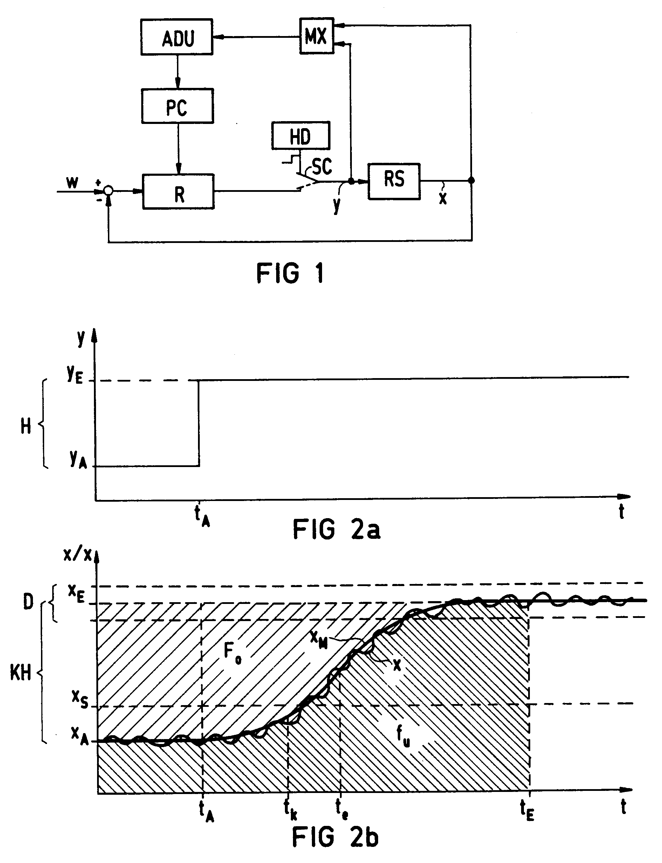

In Figur 1 ist mit RS eine Regelstrecke eines Prozesses bezeichnet, von der angenommen ist, daß sie ähnlich einem Verzögerungsglied n-ter Ordnung mit gleichen Zeitkonstanten wirkt. Zeitkonstante, Ordnungszahl und Prozeßverstärkung sind nicht bekannt und sollen experimentell ermittelt werden. Hierzu ist die Regelstrecke über einen Schalter SC an ein Gerät HD angeschlossen, mit dem ein Sprungsignal als Stellgröße $y$ auf die Regelstrecke RS gegeben werden kann. Das Sprungsignal $y$ und die Antwort $x$ der Regelstrecke auf das Sprungsignal schaltet ein Multiplexer MX auf einen Analog-Digital-Umsetzer ADU, an den ein Bediengerät PC angeschlossen ist. Dieses erfaßt die beiden Signale und ermittelt die Parameter der Regelstrecke RS. Nach einem bekannten Verfahren werden daraus die Parameter eines Reglers R errechnet und in diesen eingegeben. Zum Umschalten auf Automatikbetrieb wird mit dem Schalter SC der Regelkreis geschlossen, in dem die Differenz zwischen Istwert $x$ und einem Sollwert $w$ gebildet und dem Regler R zugeführt wird, der daraus die Stellgröße $y$ bildet. Selbstverständlich können das Bediengerät PC, der Regler R, der Schalter SC, der Multiplexer MX, der Analog-Digital-Umsetzer ADU und das Gerät HD in einer zentralen Einheit zusammengefaßt sein, die auch den Sollwert $w$ liefert.

Figur 2a zeigt das Zeitdiagramm des Sprungsignals. Von einem konstanten Anfangswert $y_A$ steigt das Signal mit einer Anstiegszeit, die kurz ist im Vergleich zur Zeitkonstante der Regelstrecke, auf einen konstanten Endwert $y_E$ an. Die Sprunghöhe $y_E - y_A$ ist mit H bezeichnet.

In Figur 2b veranschaulicht die Kurve $x$ die Sprungantwort der Regelstrecke RS. Von einem Anfangswert $x_A$ steigt nach einer Verzugszeit das Ausgangssignal an und erreicht einen Endwert $x_E$ zu einem Zeitpunkt $t_E$. Wegen unvermeidlicher Störungen in der Regelstrecke hat das Signal $x$ nicht einen glatten, sondern einen welligen Verlauf, woraus Fehler bei der Ermittlung der Werte $x_A$ und $x_E$ entstehen können. Es ist daher zweckmäßig, als Anfangswert $x_A$ nicht nur den Wert zu einem Zeitpunkt $t_A$ zu nehmen, sondern ihn durch Mittelung mehrerer vor dem Zeitpunkt $t_A$ abgetasteter Werte zu bilden.

Die Bestimmung des Endwertes $x_E$ ist strenggenommen ein unlösbares Problem, wenn keine Annahme über die Einschwingzeit gemacht wird, da der Endwert nur asymptotisch erreicht wird und die durch die Störungen bedingte Welligkeit der Kurve $x$ das Erreichen eines Endwertes vortäuschen kann. Z. B. ist zu den Zeitpunkten $t_k$ und $t_l$ nicht ohne weiteres erkennbar, ob es sich um den Endwert eines schnellen Prozesses mit kleiner Verstärkung handelt, oder ob nur ein temporäres Plateau vorliegt. Zur Lösung dieses Problems wird in einer vorteilhaften Ausgestaltung der Erfindung, die sich allgemein zum Feststellen von Endwerten von Kurven mit welligem zeitlichem Verlauf eignet, als Endwertbedingung überprüft, ob mindestens eine bestimmte Anzahl der abgetasteten Werte in einem schmalen Streifen um den letzten Wert liegt.

2

Beispielsweise kann die Mindestanzahl die Hälfte oder ein Drittel der Werte sein; es kann aber auch eine absolute Zahl von z. B. 100 Werten, angenommen werden. In Figur 2b ist dieser schmale Streifen mit D bezeichnet. Er kann z. B. 2 bis 3 % des letzten Wertes betragen. Diese Bedingung wird zum Zeitpunkt $t_E$ erreicht; der Einschwingvorgang gilt zu diesem Zeitpunkt als abgeschlossen. Auch bei der Ermittlung des Endwertes $x_E$ kann es zweckmäßig sein, nicht den Wert zum Zeitpunkt $t_E$ zu nehmen, sondern einen Mittelwert von auf diesen Zeitpunkt folgenden oder auch vorangehender Meßwerte zu verwenden.

Die beschriebene Endwertbedingung reicht unter Umständen nicht aus, den Endwert $x_E$ und den Zeitpunkt $t_E$ zuverlässig zu bestimmen; denn in dem auf den Zeitpunkt $t_A$ folgenden horizontal verlaufenden Teil der Kurve x und auch noch zu Beginn des Anstiegs der Kurve, wie im Zeitpunkt $t_k$, kann die Anzahl der Punkte, die nur wenig voneinander abweichen, verhältnismäßig groß im Vergleich zur Gesamtzahl der abgetasteten Werte sein, so daß die beschriebene Endwertbedingung erfüllt ist. Vorteilhaft ist daher eine Ansprechschwelle $x_S$ vorgesehen. Erst wenn diese Schwelle überschritten ist, werden die Werte auf das Endwertkriterium überprüft. Das Einführen der Ansprechschwelle ist auch deshalb zweckmäßig, weil erst darüber das Nutz-Störsignal-Verhältnis so groß ist, daß die Sprungantwort vernünftig ausgewertet werden kann.

Damit die Auswertung zeitlich von der Meßwerterfassung entkoppelt werden kann, muß eine ausreichend große Anzahl von Abtastwerten abgespeichert werden. Da für die Abspeicherung nur ein begrenzter Speicherbereich zur Verfügung steht und die Einschwingzeit, die zwischen einigen Millisekunden und mehreren Stunden betragen kann, zu Beginn der Abtastung auch nicht näherungsweise bekannt ist, kann zunächst die Abtastrate nicht passend gewählt werden. Zur Lösung dieses Problems wird ein Verfahren vorgeschlagen, das allgemein zum Abspeichern von Reihen von Werten unbekannter Anzahl in einen vorgegebenen Speicherbereich geeignet ist. Bei diesem Verfahren wird nach dem Start die Sprungantwort zunächst mit der höchstmöglichen Abtastrate erfaßt, und die Abtastwerte werden, gegebenenfalls einschließlich der zugehörigen Zeitwerte, abgespeichert. Sobald der verfügbare Speicherbereich gefüllt ist, ohne daß das Endekriterium erreicht ist, wird eine Datenkomprimierung der gespeicherten Werte vorgenommen. Diese kann z. B. darin bestehen, daß jeder zweite Wert verworfen wird. Damit wird die Hälfte der Speicherplätze zur Aufnahme weiterer Meßwerte frei. Die Abtastung wird dann entweder unverändert in der schnellstmöglichen Weise fortgesetzt, wobei aber nur noch jeder zweite Wert abgespeichert wird, oder die Abtastrate wird halbiert. Hat die Gesamtzahl der Speicherwerte erneut die maximal zulässige Grenze ohne Ansprechen eines Endwertkriteriums erreicht, werden die gespeicherten Werte abermals komprimiert. In den frei gewordenen Speicherbereich wird dann, falls die Abtastrate unverändert bleibt, nur noch jeder vierte Wert eingetragen oder die Abtastrate wird nochmals halbiert und alle Abtastwerte gespeichert. Dieses Verfahren wird bis zum Erreichen eines Endekriteriums fortgesetzt. Als Ergebnis hat man dann eine vorgegebene Anzahl zeitlich geordneter Abtastwerte der gesamten Sprungantwort, deren Dauer zunächst völlig unbekannt war.

In dem erwähnten einfachen Beispiel wurde zur Datenreduzierung jeder zweite Meßwert nach jedem Vollschreiben des Speicherbereiches ersatzlos gestrichen. Selbstverständlich sind auch andere Datenkomprimierverfahren, wie Mittelung von jeweils zwei aufeinanderfolgenden Meßwerten, möglich. Je kleiner die Maximalzahl der gespeicherten Meßwerte ist, desto sinnvoller sind solche, welche die Informationen aller Meßwerte einbeziehen.

Vorteilhaft ist die maximale Anzahl der gespeicherten Meßwerte bzw. der Zellen des vorgegebenen Speicherbereichs ungerade. Der erste Meßwert ist der Anfangswert $x_A$, der nicht gelöscht oder verändert wird. Die Anzahl der übrigen Werte ist geradzahlig, so daß zur Datenkomprimierung je ein Wertepaar zu einem neuen Wert zusammengefaßt werden kann.

Für die Regelstrecke RS wird ein Modell angenommen, das auf ein Sprungsignal der Höhe H eine Sprungantwort liefert, die durch folgende Formel beschrieben wird:

$$x_M = K H \left( 1 - e^{-t/T} \sum_{j=0}^{n-1} \frac{(t/T)^j}{j!} \right)$$

Die Parameter Streckenverstärkung K, Zeitkonstante T und Ordnungszahl n müssen so bestimmt werden, daß die errechneten Werte $x_M$ bestmöglich an die gemessenen Werte angepaßt sind. Am einfachsten ist die Bestimmung des Produktes K H, das gleich der Differenz $x_E - x_A$ zwischen Endwert $x_E$ und Anfangswert $x_A$ ist. Eine weitere einfache Bestimmungsgleichung ergibt sich daraus, daß für die Fläche

$F_o$, die begrenzt ist durch den Endwert $x_E$, die Zeitpunkte $t_A$ und $t_E$ sowie die errechnete Kurve $x_M$ die einfache Gleichung $F_o = K\,T\,n\,H$ gilt und daß andererseits die Fläche $f_o$, begrenzt durch den Endwert $x_E$, die Zeitpunkte $t_A$ und $t_E$ sowie die gemessene Kurve x, aus den Meßwerten leicht ermittelt werden kann nach der Formel

$$f_o = (t_E - t_A)(x_E - x_A) - f_u$$

worin $f_u$ die durch den Anfangswert $x_A$, die Zeitpunkte $t_E$ und $t_A$ und die Kurve der gemessenen Werte x begrenzte Fläche ist und aus den Meßwerten nach der Formel

$$f_u = \frac{1}{2} \sum_i (x_i + x_{i-1})(t_i - t_{i-1})$$

berechnet werden kann. Zwischen der Zeitkonstanten T und der ganzzahligen Ordnungszahl n besteht dann die Beziehung

$$T = \frac{f_o}{K \cdot H} \frac{1}{n}$$

Für den praktisch sinnvollen Ordnungszahlenbereich, z. B. n = 1 bis 10, werden mit dieser Gleichung die zugehörigen Zeitkonstanten T ermittelt. Für jedes Wertepaar n, T werden für die Zeitpunkte $t_i$ die Werte $x_{M,i}$ errechnet und mit den gemessenen Werten $x_i$ verglichen. Dieser Vergleich kann in dem Summieren der Beträge der Differenzen bestehen:

$$ZF(n,T) = \sum_i |x_{M,i} - x_i|$$

Diese Summe ist der Fehlerfläche gleichwertig und ist ein aussagekräftiges Maß für die Abweichung zwischen der gemessenen Sprungantwort und dem sich für das jeweilige Parameterpaar n, T ergebenden Kurvenverlauf $x_M$. Dasjenige Parameterpaar n, T, für das die kleinste Abweichung ermittelt wird, stellt zusammen mit der Streckenverstärkung K die optimalen Parameter dar. Die Abweichung der Kurvenpaare voneinander kann auch nach einer anderen Methode, z. B. aus der Summe der Fehlerquadrate ermittelt werden.

In dem neuen Verfahren sind die entscheidenden Rechenoperationen das Bilden von Summen, wodurch Störungen in den Meßwerten nur einen geringen Einfluß haben, so daß besondere Filtermaßnahmen im allgemeinen nicht erforderlich sind. Der numerische Rechenaufwand für die Optimierung der Parameter T und n reduziert sich auf die Bestimmung des kleinsten von zehn Werten.

## Patentansprüche

1. Verfahren zum Bestimmen der Parameter eines Verzögerungsgliedes n-ter Ordnung mit gleichen Zeitkonstanten, bei welchem dem Eingang des Verzögerungsgliedes ein Sprungsignal der Höhe H zugeführt wird, aus dessen Ausgangssignal (Sprungantwort) mit dem Anfangswert $x_A$ zum Zeitpunkt $t_A$ und mit dem durch ein Endekriterium bestimmbaren Endwert $x_E$ zum Zeitpunkt $t_E$ die Streckenverstärkung

$$K = \frac{x_E - x_A}{H},$$

sowie die Ordnungszahl n und die Zeitkonstante T ermittelt werden, **gekennzeichnet durch**
- Ermitteln der Signal-/Zeitfläche

$$f_0 = (t_E - t_A)(x_E - x_A) - \frac{1}{2}\sum_i (x_i + x_{i-1})(t_i - t_{i-1})$$

mit $x_i$ = gemessene Werte der Sprungantwort zu Zeitpunkten $t_i$;
- Ermitteln von Parameterpaaren T,n für mehrere praktisch sinnvolle Ordnungszahlen n nach der Formel

$$T = \frac{f_0}{K \cdot H} \frac{1}{n};$$

- Errechnen von Sprungantwortwerten $x_{M,i}$ für die Zeitpunkte $t_i$ und für jedes ermittelte Parameterpaar T,n nach der Gleichung

$$x_{M,i} = K\,H\,\left(1 - e^{-t_i/T}\sum_{j=0}^{n-1}\frac{(t_i/T_n)^j}{i!}\right)$$

- Errechnen der Abweichung der gemessenen von der errechneten Sprungantwort für jedes Wertepaar T,n;
- Auswählen des Wertepaares T,n, bei dem die Abweichung am kleinsten ist.

2. Verfahren nach Anspruch 1, **dadurch gekennzeichnet,** daß die Abweichung mit der Gleichung

$$ZF(n,T) = \sum_i |X_{n,i} - x_i|$$

errechnet wird.

3. Verfahren nach Anspruch 1 oder 2, **dadurch gekennzeichnet,** daß der Endwert $x_E$ als erreicht gilt, wenn der Anteil der Werte, die um weniger als einen vorgegebenen Betrag vom letzten Wert abweichen, an der Gesamtzahl der Werte $x_i$ einen vorgegebenen Betrag übersteigt.

4. Verfahren nach Anspruch 3, **dadurch gekennzeichnet,** daß die Werte $x_i$ der Sprungantwort, die um weniger als einen vorgegebenen Betrag vom letzten Wert abweichen, nach der Formel

$$|x_i - x_k| \leqq p\,|x_i - x_l|$$

mit $k = l \dots i$ und $p \leqq 0,1$ ermittelt werden.

**5.** Verfahren nach Anspruch 3 oder 4, **dadurch gekennzeichnet**, daß der Endwert dann als erreicht gilt, wenn mindestens die Hälfte der Werte um weniger als den vorgegebenen Betrag vom letzten Wert abweichen.

**6.** Verfahren nach einem der Ansprüche 1 bis 5, **dadurch gekennzeichnet, daß**
- das Ausgangssignal (x) abgetastet und in Meßwerte ($x_i$) umgewandelt wird, die nacheinander in einen vorgegebenen Speicherbereich eingetragen werden, und
- jedesmal dann, wenn der Speicherbereich gefüllt ist, eine Datenreduktion der gespeicherten und der folgenden neuen Werte vorgenommen wird, bis das Endekriterium erfüllt ist.

**7.** Verfahren nach Anspruch 6, **dadurch gekennzeichnet,** daß der Speicherbereich eine ungerade Anzahl von Zellen enthält und zur jeweiligen Datenreduktion jeweils zwei Meßwerte zu einem Wert zusammengefaßt werden, wobei der Anfangswert $x_A$, $t_A$ unverändert bleibt.

**8.** Verfahren nach Anspruch 7, **dadurch gekennzeichnet,** daß jeder zweite Meßwert gelöscht wird.

**Claims**

**1.** Method for determining the parameters of a delay element of the nth order with the same time constants, in which there is supplied to the input of the delay element a step signal of the height H, from whose output signal (step response), with the initial value $x_A$ at the instant $t_A$ and with the final value $x_E$, determinable by an end criterion, at the instant $t_E$, the distance amplification

$$K = \frac{x_E - x_A}{H}$$

as well as the ordinal number n and the time constant T are determined, characterized by
- determination of the signal/time surface

$$fo = (t_E - t_A)(x_E - x_A) - \tfrac{1}{2} \sum_i (x_i + x_{i-1})(t_i - t_{i-1})$$

where $x_i$ = measured values of the step response at instants $t_i$;
- determination of parameter pairs T,n for several practically efficient ordinal numbers n according to the formula

$$T = \frac{f_o}{K \cdot H} \frac{1}{n} \quad ;$$

- calculation of step-response values $x_{M,i}$ for the instants $t_i$ and for each determined parameter pair T,n according to the equation

$$x_{M,i} = K H \left(1 - e^{-t_i/T} \sum_{j=0}^{n-1} \frac{(t_i/T_n)^j}{i!}\right)$$

- calculation of the difference of the measured step response from the calculated one for each value pair T,n;
- selection of the value pair T,n, where the difference is smallest.

2. Method according to claim 1,
   characterized in that the difference is calculated by the equation

$$ZF(n,T) = \sum_{i} |X_{n,i} - x_i|$$

3. Method according to claim 1 or 2,
   characterized in that the final value $x_E$ counts as reached when the portion of the values which differ from the last value by less than a specified amount exceeds a specified amount of the total number of the values $x_i$.

4. Method according to claim 3,
   characterized in that the values $x_i$ of the step response which differ from the last value by less than a specified amount are determined according to the formula

$$|x_i - x_k| \leqq p |x_i - x_l|$$

   where k = 1 ... i and $p \leq 0.1$.

5. Method according to claim 3 or 4,
   characterized in that the final value counts as reached if at least half the values differ from the last value by less than the specified amount.

6. Method according to one of claims 1 to 5,
   characterized in that
   - the output signal (x) is scanned and is converted into measured values ($x_i$), which are successively entered into a specified memory region, and
   - each time the memory region is filled, a data reduction of the stored and of the subsequent new values is undertaken until the end criterion is fulfilled.

7. Method according to claim 6,
   characterized in that the memory region contains an uneven number of cells and for the respective data reduction two measured values are combined into one value respectively, with the initial value $x_A$, $t_A$ remaining unaltered.

8. Method according to claim 7,
   characterized in that each second measured value is erased.

**Revendications**

1. Procédé pour déterminer les paramètres d'un circuit de retardement d'ordre n avec des constantes de temps identiques, selon lequel à l'entrée du circuit de retardement est envoyé un signal échelon de hauteur H et à partir du signal de sortie (réponse à échelon) duquel sont déterminés, avec la valeur initiale $x_A$ à l'instant $t_A$ et avec la valeur finale $x_E$ à l'instant $t_E$, pouvant être déterminée au moyen d'un critère de fin, l'amplification dans la section

7

$$K = \frac{x_E \times x_A}{H}$$

ainsi que le numéro d'ordre n et la constante de temps K, caractérisé par
- la détermination de la surface signal/temps

$$f_o = (t_E - t_A)(x_E - x_A) - \frac{1}{2}\sum_i (x_i - x_{i-1})(t_i - t_{i-1})$$

avec $x_i$ = valeurs mesurées de la réponse échelon à des instants $t_i$;
- la détermination de couples de paramètres T,n pour plusieurs numéros d'ordre n appropriés dans la pratique, conformément à la formule

$$T = \frac{f_o}{K.H} - \frac{1}{n} \; ;$$

- le calcul de valeurs $x_M,i$ de la réponse échelon pour les instants $t_i$ pour chaque couple déterminé de paramètres T,n conformément à la relation :

$$x_{M,i} = K \, H \, (1 - e^{-t_i/T} \sum_{j=0}^{n-1} \frac{(t_i/T_n)^j}{i!})$$

- le calcul de l'écart entre la réponse échelon mesurée et la réponse échelon calculée pour chaque couple de valeurs T,n;
- la sélection du couple de valeurs T,n, pour lequel l'écart est minimum.

2. Procédé suivant la revendication 1, caractérisé par le fait que l'écart est calculé au moyen de la relation

$$ZF(n,T) = \sum_i |x_{n,i} - x_i|.$$

3. Procédé suivant la revendication 1 ou 2, caractérisé par le fait que la valeur finale $x_E$ est considérée comme atteinte lorsque le pourcentage des valeurs, qui s'écartent par rapport au nombre total des valeurs $x_i$, de moins d'une valeur prédéterminée, dépasse une valeur prédéterminée.

4. Procédé suivant la revendication 3, caractérisé par le fait que les valeurs $x_i$ de la réponse échelon, qui s'écartent de moins d'une valeur prédéterminée, par rapport à la dernière valeur, sont déterminées conformément à

$$|x_i - x_k| \leq p \, |x_i - x_1|$$

avec k = 1... i et p ≤ 0,1.

5. Procédé suivant la revendication 3 ou 4, caractérisé par le fait que la valeur finale est considérée comme atteinte lorsqu'au moins la moitié des valeurs s'écarte de moins de la valeur prédéterminée, par rapport à la valeur finale.

6. Procédé suivant l'une des revendications 1 à 5, caractérisé par le fait que
- le signal de sortie (x) est échantillonné et converti en des valeurs de mesure ($x_i$), qui sont introduites successivement dans une zone prédéterminée de mémoire, et
- chaque fois que la zone de mémoire est remplie, une réduction des données des valeurs mémorisées et des nouvelles valeurs suivantes est exécutée jusqu'à ce que le critère de fin soit satisfait.

7. Procédé suivant la revendication 6, caractérisé par le fait que la zone de mémoire comporte un nombre impair de cellules et que, pour la réduction des données, respectivement deux valeurs de mesure sont réunies pour former une valeur, la valeur initiale $x_A$, $t_A$ restant inchangée.

8. Procédé suivant la revendication 7, caractérisé par le fait qu'on efface chaque seconde valeur de mesure.

FIG 1

FIG 2a

FIG 2b